Europäisches Patentamt

European Patent Office

Office européen des brevets

(11) Veröffentlichungsnummer: **0 272 460**
**A1**

# (12) EUROPÄISCHE PATENTANMELDUNG

(21) Anmeldenummer: 87117151.8

(22) Anmeldetag: 20.11.87

(51) Int. Cl.⁴: **H02H 7/28**

(30) Priorität: 25.11.86 DD 296612

(43) Veröffentlichungstag der Anmeldung:
29.06.88 Patentblatt 88/26

(84) Benannte Vertragsstaaten:
**AT BE CH DE FR GB IT LI NL**

(71) Anmelder: **VEB Geräte- und Regler-Werk Leipzig**
**Baalsdorfer Strasse 55**
**DDR-7027 Leipzig(DD)**

(72) Erfinder: **Rohbeck, Volker**
**Sachsenstrasse 9**
**DDR-7050 Leipzig(DD)**
Erfinder: **Burkhardt, Ralf**
**Manetstrasse 2**
**DDR-7010 Leipzig(DD)**
Erfinder: **Gibas, Peter, Dr.**
**Schirmerstrasse 1**
**DDR-7050 Leipzig(DD)**
Erfinder: **Kriesel, Werner, Prof. Dr. sc. phil.**
**Rödelstrasse 5**
**DDR-7031 Leipzig(DD)**
Erfinder: **Jeckel, Uwe**
**Hoferstrasse 5**
**DDR-7050 Leipzig(DD)**
Erfinder: **Steinbock, Klaus, Dr.-Ing.**
**Arthur-Hoffmann-Strasse 4**
**DDR-7010 Leipzig(DD)**

(74) Vertreter: **Patentanwälte Beetz sen. - Beetz jun. Timpe - Siegfried - Schmitt-Fumian**
**Steinsdorfstrasse 10**
**D-8000 München 22(DE)**

(54) **Verfahren und Stromversorgungssystem zur fehlertoleranten Stromversorgung von räumlich verteilten Funktionseinheiten.**

(57) Die Erfindung betrifft ein Verfahren sowie eine Schaltung zur fehlertoleranten Stromversorgung von räumlich verteilten Funktionseinheiten, z. B. von Automatisierungsanlagen oder anderen Verbrauchern. Die Erfindung geht von einem Stromversorgungssystem aus, das als Doppelring oder Mehrfachring gestaltet ist, wobei der Ring einen einzigen Einspeisepunkt (H) sowie steuerbare Schalter (TE) zur Kurzschlußfortschaltung aufweist. Ferner weist jeder Netzknoten an jedem seiner Eingänge Strommeßeinrichtungen (ME) auf, die den Strom nach Betrag und Richtung bestimmen. Mittels einer Auswertelogik (A) werden die Meßergebnisse ausgewertet, und beim Auftreten eines Kurzschlusses in einer Verbindungsleitung (L) oder einem Netzknoten (K) wird der kurzschlußbehaftete Teil abgeschaltet, ohne daß die Versorgung der anderen Verbraucher gestört wird. Auch andere Fehlerarten, wie Unterbrechungen oder Erdschluß, werden durch das Stromversorgungssytem toleriert.

Figur 1

## Verfahren und Stromversorgungssystem zur fehlertoleranten Stromversorgung von räumlich verteilten Funktionseinheiten

Die Erfindung betrifft ein Verfahren zur fehlertoleranten Stromversorgung von räumlich verteilten Funktionseinheiten, bei denen das Stromversorgungssystem als Doppelring oder als Mehrfachring mit Punkt-zu-Punkt-Verbindungsleitungen ausgestaltet ist und einen einzigen Einspeisepunkt sowie Mittel zur Abschaltung kurzschlußbehafteter Ringteile aufweist. Die Verbindungspunkte der Verbindungsleitungen bilden dabei Netzknoten, an denen auch die Funktionseinheiten (Verbraucher) anliegen.

Die Erfindung betrifft ferner ein fehlertolerantes Stromversorgungssystem mit räumlich verteilten Funktionseinheiten, das als Doppel-oder Mehrfachring mit einem einzigen Einspeisepunkt strukturiert ist und aus Punkt-zu-Punkt-Verbindungsleitungen besteht, die mit ihren Verbindungen Netzknoten bilden. In den Verbindungsleitungen liegen Strommeßeinrichtungen sowie Schalter, die über Auslöseschaltungen angesteuert sind.

Das Verfahren zur fehlertoleranten Stromversorgung bzw. das entsprechende Stromversorgungssystem sind insbesondere für Automatisierungsanlagen vorgesehen, sind jedoch auch überall dort anwendbar, wo mit relativ geringem Aufwand ein hohes Zuverlässigkeitsniveau in er Versorgung beliebiger Verbraucher mit elektrischer Energie gewährleistet werden soll, wie in der Labormeßtechnik, der Medizintechnik, der Büro- und Schiffsautomatisierung, also überall dort, wo verschiedenste Funktionseinheiten komplex zusammenwirken.

Stromversorgungsnetze mit ringförmiger Struktur sind bekannt; eine solche Ringstruktur ist die einfachste redundante Struktur und ermöglicht es, eine Leitungsunterbrechung an einer beliebigen Stelle im Ringsystem tolerieren zu können, ohne daß zusätzlicher Aufwand in Form von Schaltern oder Meßeinrichtungen entsteht (vgl. z.B. DE-A1 2905 757). Allerdings sind solche Stromversorgungsnetze mit dem Nachteil verbunden, daß im Falle eines Kurzschlusses die Versorgung für das gesamte System ausfällt. Aus diesem Grunde sind solche Systeme für die eingangs genannten Anwendungsgebiete zunächst ungeeignet.

Des weiteren ist es bekannt, in Netzen mit zwei Netzanschlußstellen die kurzschlußbehafteten Teile des Stromversorgungssystems abzutrennen (DE-A1 2531 707). Hier wird der kurzschlußbehaftete Teil des Stromversorgungsnetzes mittels einer in jeder Netzanschlußstelle vorgenommenen Messung der Zeit vom Auftreten des Kurzschlusses bis zum Abschalten durch zusätzliche im Ringnetz angeordnete Distanzrelais ermittelt und abgeschaltet. Erst danach schließen die Distanzrelais wieder den Stromkreis.

Diese Lösung hat den Nachteil, daß zusätzliche Schalteinrichtungen außerhalb der Netzanschlußstellen benötigt werden, und daß im Kurzschlußfall stets eine durch die Zeitmessung bedingte größere stromlose Pause auftritt, die beispielsweise in zu versorgenden Informationsverarbeitungseinheiten zu Datenverlusten bzw. in anderen Stromversorgungssystemen mit hohen Zuverlässigkeitsforderungen zu unerwünschten Störungen führen kann. Des weiteren setzen diese Verfahren und die beschriebene Anordnung zur Auswertbarkeit relativ große Entfernungen zwischen den Distanzrelais und den zu versorgenden Einheiten sowie zwischen den zu versorgenden Einheiten selbst voraus, was häufig nicht gegeben ist.

Der Erfindung liegt die Aufgabe zugrunde, ein Verfahren gemäß dem Oberbegriff des Patentanspruches 1 so weiterzubilden, daß unabhängig vom räumlichen Abstand der angeschlossenen Funktionseinheiten eine Kurzschlußfortschaltung möglich wird, ohne daß es zu kurzzeitigen Unterbrechungen der Stromversorgung für alle Funktionseinheiten kommt. Ferner soll ein fehlertolerantes Stromversorgungssystem, welches von den Merkmalen des Oberbegriffs des Patentanspruchs 2 ausgeht, so weitergebildet werden, daß neben verbesserten Fehlertoleranzeigenschaften und höherer Zuverlässigkeit vor allem Kurzunterbrechungen infolge der Kurzschlußfortschaltung bei den nicht beteiligten Funktionseinheiten vermieden werden.

Diese Aufgabe wird gemäß den kennzeichnenden Merkmalen der Patentansprüche 1 und 2 gelöst. Weiterbildungen des Lösungskonzepts ergeben sich aus den Merkmalen der abhängigen Ansprüche.

Im folgenden wird das Wesen des erfindungsgemäßen Verfahrens näher erläutert:
Ein Kurz-oder Erdschluß in einer Verbindungsleitung zwischen zwei Netzknoten eines ringförmigen Stromversorgungssystems hat ein Überschreiten der festgelegten oberen Grenze der in den Netzknoten gemessenen Strombeträge zur Folge. Die Einstellung der für einen Kurz-oder Erdschluß charakteristischen oberen Stromgrenzwerte ist dabei abhängig vom Innenwiderstand der speisenden Quelle, den Widerständen der Verbindungsleitungen, der Belastung durch die angeschlossenen Verbraucher und der Topologie des Systems. Diese Stromgrenzwerte können deshalb von Netzknoten zu Netzknoten verschieden sein; es ist aber auch möglich, Gruppen von Netzknoten stets gleiche Strombeträge zuzuordnen. In Abhängigkeit vom Ort des Kurz-oder Erdschlusses innerhalb des Systems treten aber auch in weiteren Netzknoten von Verbindungsleitungen, die nicht mit Kurzschlüssen behaftet sind, Überschreitungen der oberen Stromgrenzwerte auf, so daß dieses Kriterium allein nicht ausreicht, um aus der Sicht des einzelnen Netzknotens die kurzschlußbehaftete Leitung eindeutig zu identifizieren. Das Verfahren macht sich deshalb die Erkenntnis zunutze, daß sich bei einem der beiden durch eine kurzschlußbehaftete Verbindungsleitung miteinander verbundenen Netzknoten, und nur dort, die Stromrichtung in der kurzschlußbehafteten Verbindungsleitung von den Stromrichtungen aller anderen an diesen Netzknoten angeschlossenen Verbindungsleitungen unterscheidet, so daß durch Vergleich der Stromrichtungen untereinander als zweites Kriterium die kurzschlußbehaftete Verbindungsleitung eindeutig festgestellt und vom Netzknoten getrennt werden kann. Infolge der zunächst einseitigen Abschaltung der kurzschlußbehafteten Verbindungsleitung verändern sich die Strombeträge und Stromrichtungen im Stromversorgungssystem so, daß auch für den zweiten Netzknoten, an dem die kurzschlußbehaftete Verbindungsleitung noch angeschlossen ist, die beiden genannten Kriterien in der angegebenen Weise erfüllt sind. Dadurch wird auch durch diesen Netzknoten die kurzschlußbehaftete Verbindungsleitung eindeutig identifiziert und kann abgeschaltet werden.

Verbindungsleitungen, welche infolge Leitungsunterbrechung, Abtrennung infolge Kurz-oder Erdschluß oder Potentialgleichheit der angeschlossenen Netzknoten keinen Strom führen, sind in den Stromrichtungsvergleich entwe der nicht mit einzubeziehen, oder der spezielle Vergleich mit einer solchen Verbindungsleitung ist im jeweiligen Netzknoten in jedem Fall als Stromrichtungsunterschied zu bewerten. Um solche Leitungen aus der Sicht der beiden angeschlossenen benachbarten Netzknoten zu ermitteln, wird jeweils ein Vergleich der Strombeträge mit einem festgelegten unteren Stromgrenzwert erforderlich.

Für den Netzknoten, über den die Energieeinspeisung erfolgt, gilt zusätzlich, daß eine Verbindungsleitung dann wegen Kurz-oder Erdschluß abgeschaltet wird, wenn nur in ihr ein Überschreiten der oberen Grenze des Stromes festgestellt wird und mindestens eine parallele Verbindungsleitung noch intakt ist. Darüber hinaus gestattet die Erfindung auch, einen internen Kurz-oder Erdschluß in einem Netzknoten festzustellen und entsprechend zu reagieren. Ein interner Kurz-oder Erdschluß in einem Netzknotenpunkt hat die Wirkung, daß die Stromflußrichtung in allen intakten Verbindungsleitungen aus der Sicht des Netzknotens gleich ist und in mindestens einer Verbindungsleitung das Überschreiten der oberen Grenze des Stromes festgestellt wird.

Die Wirkungsweise des fehlertoleranten Stromversorgungssystems gemäß Anspruch 2, welches das Verfahren nach Anspruch 1 realisiert, wird im folgenden beschrieben:

Im fehlerfreien Fall sind alle Verbindungsleitungen zwischen den Netzknotenpunkten intakt,und alle Schalter sind geschlossen. Tritt ein Leitungskurzschluß zwischen zwei Netzknoten j und j + 1 in einer Verbindungsleitung i auf, fließt im Stromversorgungssystem ein Kurzschlußstrom, der sich im Leitungsnetz entsprechend aufteilt. Die sich ergebenden Knotenpotentiale sind abhängig vom Innenwiderstand der speisenden Quelle, den Widerständen der Verbindungsleitungen, Meß-und Trenneinrichtungen, der aktuellen Belastung durch die angeschlossenen Funktionsein heiten und dem Ort des Kurzschlusses im Mehrfachringsystem. Kurzschlußströme, die durch Überschreiten der oberen Stromgrenze festgestellt werden und die für die Bewertung in den Netzknoten j und j + 1 relevant sind, treten in allen Verbindungsleitungen zwischen den Netzknoten j und j-1 und j + 1 und j + 2 sowie in der Leitung i zwischen den Netzknoten j und j + 1 auf. In den Verbindungsleitungen k = 1 ...n; k≠i zwischen den Netzknoten j und j + 1 fließen zwischen den Netzknoten j und j + 1 entsprechende Ausgleichsströme, deren Richtung von den Netzknotenpotentialen abhängig ist. Falls der Netzknoten j auf höherem Potential liegt als der Netzknoten j + 1, fließen über die Verbindungsleitungen k≠i gleichgerichtete Ausgleichsströme von j nach j + 1. Entsprechend den Abschaltbedingungen erhält zunächst der in der Verbindungsleitung i zwischen den Netzknoten j und j + 1 im Netzknoten j + 1 angeordnete Schalter von der Auswertelogik des Netzknotens j + 1 das binäre Ansteuersignal F zum Abschalten der Verbindungsleitung i, da nur im Netzknoten j + 1 in der Verbindungsleitung i zum Netzknoten j die Stromflußrichtung entgegengesetzt zu allen anderen an den Netzknoten j + 1 angeschlossenen Verbindungsleitungen auftritt.

Nach Abtrennen der kurzschlußbehafteten Verbindungsleitung i von Netzknoten j + 1 ändert der Strom in allen Verbindungsleitungen k≠i zwischen den Netzknoten j und j + 1 seine Richtung, wodurch auch die Abschaltbedingungen für den entsprechenden Schalter in der Leitung i des Knotens j in analoger Weise erfüllt sind. Die kurzschlußbehaftete Verbindungsleitung ist damit herausgetrennt. Die dafür notwendige Zeit hängt im wesentlichen von der Schaltzeit der Schalter ab.

Bei internem Kurzschluß im Netzknoten j fließt über alle intakten angeschlossenen Leitungen Strom der gleichen Richtung in den Netzknoten. Fließt Kurzschlußstrom in einer Leitung, deren sämtliche Parallelleitungen defekt und damit abgeschaltet oder unterbrochen sind, wird das entstehende binäre Signal O für das Überschreiten des festgelegten oberen Stromgrenzwertes in den benachbarten Netzknoten über die in der Kanallogikschaltung angeordnete Verzögerungsschaltung an die Verknüpfungsschaltung weitergeleitet. Die Zeitkonstante der Verzögerungsschaltung ist so eingestellt, daß die Auswertelogiken in den anderen Netzknotenpunkten des Stromversorgungssystems eingeschwungen und die Schaltzeiten der Schalter abgelaufen sind, bevor die Verzögerungsschaltung durchschaltet. Mit Hilfe dieser Anordnung ist es möglich, auf mehrere Kurzschlüsse innerhalb des Energieverteilungssystem zu reagieren. Tritt nämlich ein Kurzschluß auf, der nicht in der einzigen intakten Leitung zwischen zwei Netzknotenpunkten stattfand, haben die an den tatsächlichen Ort dieses Kurzschlusses angrenzenden Netzknoten genügend Zeit, um die defekte Verbindungsleitung abzuschalten. Sinkt der Netzstrom in dieser Zeit nicht unter die obere Grenze O in der einzigen Verbindungsleitung zwischen zwei Netzknoten, wird in den beiden Netzknoten, die nur noch durch diese eine Verbindungsleitung verbunden sind, das binäre Signal O für das Überschreiten des festgelegten oberen Stromgrenzwertes an die Verknüpfungsschaltung weitergeleitet. Trat der Kurzschluß tatsächlich in dieser einzigen Verbindungsleitung auf, wird diese somit nach der durch die Zeitverzögerungsschaltung vorgegebenen Zeit abgeschaltet, da das Signal O auch nach Ablauf der Zeitverzögerung noch anliegt.

Die Erfindung wird nachfolgend an einem Ausführungsbeispiel näher erläutert:

Es Zeigen:

Fig. 1 die Topologie eines als Doppelring ausgebildeten fehlertoleranten Stromversorgungssystems mit 8 Netzknoten;

Fig. 2 den Aufbau eines Netzknotens;

Fig. 3 den Aufbau der Auswertelogik für ein Stromversorgungssystem mit n Ringleitungen und

Fig. 4 die schaltungstechnische Realisierung der Verknüpfungslogikschaltung V gemäß Anspruch 4.

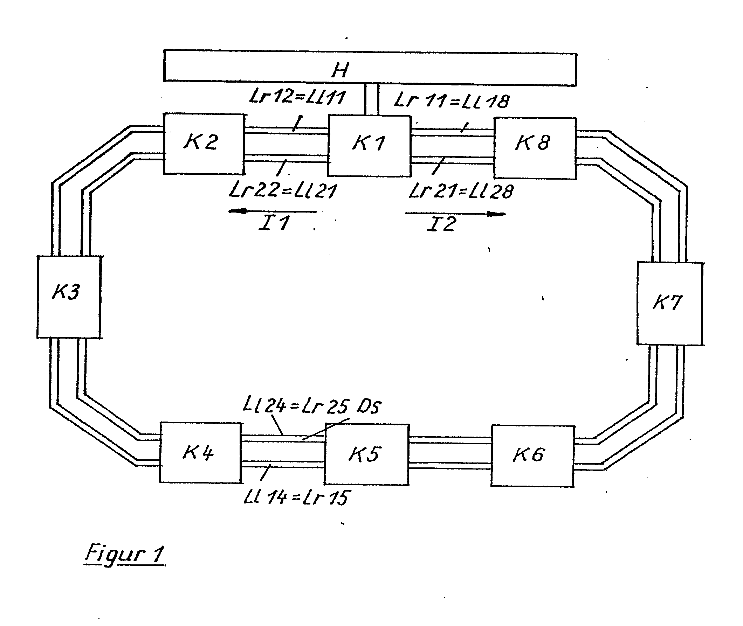

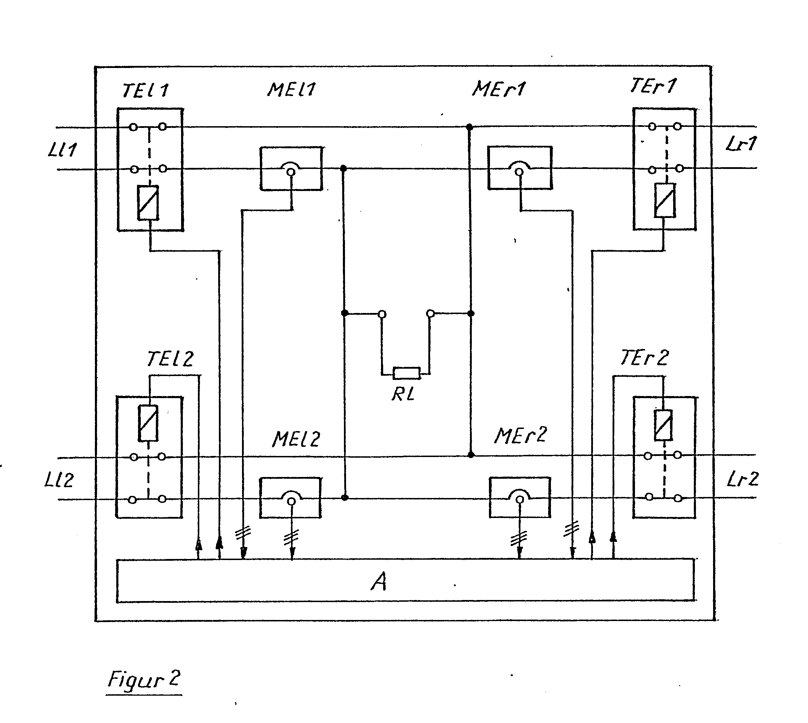

Figur 1 zeigt ein ringförmiges Stromversorgungssystem, welches aus zwei unabhängigen Versorgungsringen besteht, die jeweils in Netzknoten K1...K8 unterbrochen sind. Innerhalb der Netzknoten K1...K8 sind die Verbindungsleitungen über in Figur 2 dargestellte steuerbare Schalter TEl1, TEl2, TEr1, TEr2 und Strommeßeinrichtungen MEl1, MEl2, Mer1, MEr2 miteinander verbunden. Im Verbindungspunkt der vier an jeden Netzknotenpunkt angeschlossenen Leitungen Ll1, Ll2, Lr1, Lr2 ist die Last einer zu versorgenden Funktionseinheit einer Automatisierungsanlage, hier symbolisch durch den Lastwiderstand RL dargestellt, angeschlossen.

Der Aufbau aller Netzknoten ist gleich. Im Netzknoten K1 wird die Energieeinspeisung vom Einspeisepunkt H über eine Einspeisestichleitung vorgenommen.

Im fehlerfreien Fall fließt der Strom aus einem Einspeisepunkt H über eine Einspeisestichleitung und den Netzknoten K1 in das doppelringförmige Netz und wird bei gleichlangen und gleichstarken Leitungen zu gleichen Teilen auf die beiden Ringe aufgeteilt. In den zwischen zwei Netzknoten befindlichen parallelen Verbindungsleitungen fließt deshalb ein nach Betrag und Phase gleicher Strom. Die Verbindung der Knotenpunkte des Netzes erfolgt so, daß jeweils Leitung $Ll1_j$ (Leitung Ll1) des Netzknotens j) der Leitung $Lr1_{j+1}$ (Leitung Lr1 des Netzknotens j + 1) und Leitung $Ll2_j$ (Leitung Ll2 des Netzknotens j) der Leitung $Lr2_{j+1}$ (Leitung Lr2 des Netzknotens j + 1) entsprechen. Zur Schließung des Ringes sind die Netzknoten K1 und K8 durch die Leitungen $Lr1_1 = Ll1_8$ sowie $Lr2_1 = Ll2_8$ verbunden. Aufgrund des ringförmigen Aufbaus fließt der Strom aus dem Netzknoten K1 in den Leitungen $Ll1_1$ und $Ll2_1$ bzw. $Lr1_1$ und $Lr2_1$ in den jeweils gleichen Richtungen, die zwischen $Ll1_1$, $Ll2_1$ und $Lr1_1$ verschieden sind. Das heißt,I1 fließt entgegengesetzt zu I2, wobei I1 und I2 die Summen der Ströme in den Leitungen $Ll1_1$ und $Ll2_1$ bzw. $Lr1_1$ und $Lr2_1$ sind. Die Stromflußrichtungen werden bis zur aktuellen Hauptsenke des Systems beibehalten, die sich je nach Leistung der zugeschalteten Verbraucher während des Betriebes ändern kann. Den Aufbau der einzelnen Netzknoten zeigt Figur 2. Über die Verbindungsleitungen Ll1, Ll2, Lr1 und Lr2 fließen die Leitungsströme in den dargestellten Netzknoten hinein bzw. aus ihm heraus. Die Verbindungsleitungen Ll1 und Lr1 bzw. Ll2 und Lr2 gehören dabei zu demselben Leitungsring. Der Strom fließt über die Schalter TEl1, TEl2, TEr1, TEr2 und die Meßeinrichtungen MEl1, MEl2, MEr1, MEr2 in den Netzknoten hinein bzw. aus dem Netzknoten heraus, an den symbolisch die Last RL angeschlossen ist. Die Schalter TEl1, TEl2, TEr1, TEr2 trennen durch die Auswertelogik A gesteuert im Kurzschlußfall die angeschlossenen Leitungen vom Netzknoten.

Die Meßeinrichtungen MEl1, MEl2, MEr1, MEr2 messen den Leitungsstrom und bewerten ihn bezüglich seiner Richtung, des Unterschreitens einer festgelegten unteren Grenze und des Überschreitens einer ebenfalls festgelegten oberen Grenze mit je einem binären Ausgangssignal $Rl_1$, $Rl_2$, $Rr_1$, $Rr_2$, $Ul_1$, $Ul_2$, $Ur_1$, $Ur_2$, $Ol_1$, $Ol_2$, $Or_1$, $Or_2$, das jeweils in die Auswertelogik A eingegeben wird. Das Signal U wird von einer Meßeinrichtung dann gesetzt, wenn die untere Stromgrenze unterschritten wird. Das Signal O liegt am Ausgang einer Meßeinrichtung dann an, wenn von dieser die Überschreitung des festgelegten oberen Stromgrenzwertes festgestellt wurde. Das Richtungssignal R wird für die in einer Verbindungsleitung registrierte Stromrichtung aus der Sicht des Netzknotens definiert, d. h. zum Beispiel bei herausfließendem Strom gesetzt oder umgekehrt.

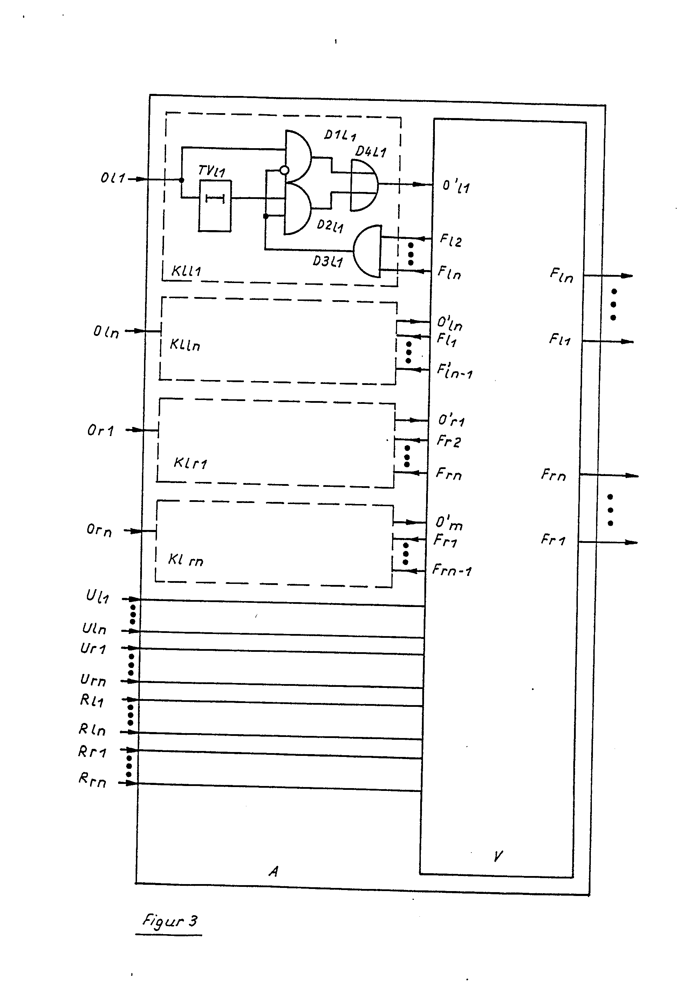

Die in Figur 3 dargestellte Auswertelogik unterteilt sich in eine mit der Anzahl der Leitungen $Ll_1$, $Ll_2$, $Llr_1$, $Llr_2$ korrespondierende Anzahl an Kanallogikschaltungen $KLl_1$, $KLl2$, $KLr2$ und eine gemeinsame Verknüpfungslogik. In den Kanallogikschaltungen KLl1, KLl2, KLr1, KLr2 werden die von den

4

Strommeßeinrichtungen MEl1, MEl2, MEr1, MEr2 kommenden Signale Ol·, Ol₂, Or·, Or₂ vorverarbeitet, wie noch näher beschrieben wird, und erscheinen am Ausgang der Kanallogikschaltungen als Signale Ol'·, Ol'₂, Or'· und Or'₂. Die Signale Fl·, Fl₂, Fr·, Fr₂ am Ausgang der Verknüpfungsschaltung V sind Ansteuersignale für die zugeordneten Trennschalter.

Durch die Verknüpfungslogikschaltung V werden folgende Boolesche Gleichungen realisiert:

$$Fl_1 = Ol'_1 \quad \wedge \quad \Big\{ [(Rl_1 \neq Rl_2) \vee Ul_2] \wedge [(Rl_1 \neq Rr_2) \vee Ur_2]$$
$$\wedge \ [(Rl_1 \neq Rr_1) \vee Ur_1] \vee [INTK]$$
$$\vee \ [\overline{Ol}'_2 \wedge \overline{Or}'_2 \wedge \overline{Or}'_1] \Big\}$$

$$Fl_2 = Ol'_2 \quad \wedge \quad \Big\{ [(Rl_2 \neq Rl_1) \vee Ul_1] \wedge [(Rl_2 \neq Rr_1) \vee Ur_1]$$
$$\wedge \ [(Rl_2 \neq Rr_2) \vee Ur_2] \vee [INTK]$$
$$\vee \ [\overline{Ol}'_1 \wedge \overline{Or}'_1 \wedge \overline{Or}'_2] \Big\}$$

$$Fr_1 = Or'_1 \quad \wedge \quad \Big\{ [(Rr_1 \neq Rl_2) \vee Ul_2] \wedge [(Rr_1 \neq Rr_2) \vee Ur_2]$$
$$\wedge \ [(Rr_1 \neq Rl_1) \vee Ul_1] \vee [INTK]$$
$$\vee \ [\overline{Ol}'_2 \wedge \overline{Or}'_2 \wedge \overline{Ol}'_1] \Big\}$$

$$Fr_2 = Or'_2 \quad \wedge \quad \Big\{ [(Rr_2 \neq Rl_1) \vee Ul_1] \wedge [(Rr_2 \neq Rr_1) \vee Ur_1]$$
$$\wedge \ [(Rr_2 \neq Rl_2) \vee Ul_2] \vee [INTK]$$
$$\vee \ [\overline{Ol}'_1 \wedge \overline{Or}'_1 \wedge \overline{Ol}'_2] \Big\}$$

$$\text{mit } INTK = \Big\{ \Big\{ \bigwedge_{k=1}^{2} [(Rl_k \vee Fl_k) \wedge (Rr_k \vee Fr_k)] \Big\}$$
$$\vee \Big\{ \bigwedge_{k=1}^{2} [(\overline{Rl}_k \vee Fl_k) \wedge (\overline{Rr}_k \vee Fr_k)] \Big\} \Big\}$$
$$\wedge \Big\{ \bigvee_{k=1}^{2} [Ol'_k \vee Or'_k] \Big\} \quad .$$

INTK ist ein intern in der Verknüpfungsschaltung V entstehendes Signal, welches dann gesetzt wird, wenn im Innern des betreffenden Netzknotens, beispielsweise unmittelbar am Verbraucher RL, ein Kurz-oder Erdschluß aufgetreten ist. Ein knoteninterner Kurzschluß ist dadurch gekennzeichnet, daß auf allen intakten Leitungen ein Kurzschlußstrom fließt, wobei die Stromrichtung in allen intakten Leitungen gleich ist. Eine Ausnahme stellt dabei der Netzknoten, in den die Energieeinspeisung erfolgt, d. h. der Netzknoten K1 im Ausführungsbeispiel, dar. Das Auftreten eines internen Kurzschlusses in diesem Netzknoten ist gleichbedeutend mit einem Kurzschluß in der Einspeisestichleitung oder im Einspeisepunkt H selbst und führt im Einspeisepunkt H zum Abschalten der Energiezufuhr für das gesamte Stromversorgungssystem. Das Signal INTK entsteht in der Verknüpfungslogik des Netzknotens K1 in diesem Fall nicht, da über die Verbindungsleitungen zu den benachbarten Netzknoten kein Kurzschlußstrom fließt. Um auch bei einem an anderer Stelle des Stromversorgungssystems auftretenden Kurzschluß das Entstehen des Signals INTK im Netzknoten K1 und das Abtrennen dieses Versorgungsknotens vom gesamten System sicher zu verhindern, wird das Signal INTK im Netzknoten K1 statisch auf Null gesetzt. Zur Erläuterung der Wirkungsweise der Anordnung im Fehlerfall sei angenommen, daß der Fehler an der Defektstelle DS zwischen den Knotenpunkten K4 und K5 in Figur 1 auftritt.

Fehlerfall Leitungsunterbrechung:

Bei Auftreten einer Leitungsunterbrechung an der Defektstelle DS fließt kein Strom mehr auf der Leitung $LI2_4$ (d. h. auf Leitung LI2 des Knotens 4), die der Leitung $Lr2_5$ (d. h. der Leitung Lr2 des Knotens 5) entspricht. Die Meßeinrichtungen $MEI2_4$ und $MEr2_5$ (Meßeinrichtungen in Leitung LI2 des Knotens 4 und Meßeinrichtungen in Leitung Lr2 des Knotens 5) stellen die Unterschreitung des unteren Stromgrenzwertes fest und setzen die Signale $UI2_4$ und $Ur2_5$ für die Auswertelogik A.

Fehlerfall Leitungskurzschluß:

Tritt an der angenommenen Defektstelle DS in Figur 1 ein Kurz-oder Erdschluß auf, fließt im gesamten System ein Kurzschlußstrom. Der Strom teilt sich gleichmäßig auf die beiden parallelen Ringe auf. Die obere Grenze in den Strommeßeinrichtungen kann dabei durchaus so eingestellt sein, daß in jedem der zwei parallelen intakten Leitungsabschnitte die Überschreitung der oberen Stromgrenze festgestellt wird. In jeder Kanallogikschaltung jedes Netzknotens wird dann das Signal $OI_{ij}$ und $Or_{ij}$ gesetzt. Die Abarbeitung der oben angegebenen Booleschen Gleichungen ergibt, daß nur die Leitung abgeschaltet wird, in der Kurzschlußstrom fließt und deren Stromflußrichtung entgegengesetzt zu der aller anderen Verbindungsleitungen eines Netzknotens ist. Das trifft aber nur für die Leitung $LI2_4 = Lr2_5$ zu, so daß die Schalter $TEI2_4$ und $TEr2_5$ öffnen. Die Reihenfolge der Abschaltung ist abhängig vom aktuellen Potential der Netzknoten K4 und K5. Ein Leitungskurzschluß ist autonom in jedem Netzknoten genau dann feststellbar, wenn die zur betroffenen Leitung parallele Leitung intakt ist. Tritt in der Verbindungsleitung $LI1_1$ ein Kurz-oder Erdschluß auf, ergibt sich analog aus der Abarbeitung der Booleschen Gleichungen, daß zunächst die Verbindungsleitung $Lr1_2$ im Netzknoten K2 abgeschaltet wird, da in dieser Verbindungsleitung Kurzschlußstrom fließt und gleichzeitig die Stromflußrichtung in dieser Leitung der in allen anderen an diesenNetzknoten angeschlossenen Verbindungsleitungen entgegengesetzt ist. Infolge dieser Abschaltung im Netzknoten K2 fließt nur noch Kurzschlußstrom in der Verbindungsleitung $LI1_1$ zwischen dem Netzknoten K1 und der Kurzschlußstelle, so daß den Booleschen Gleichungen entsprechend diese Verbindungsleitung auch im Netzknoten K1 abgeschaltet wird.

Fehlerfall interner Kurzschluß:

Ein Kurzschluß innerhalb eines Netzknotens K2 bis K8 ist dadurch gekennzeichnet, daß in allen an den Netzknoten angeschlossenen intakten Leitungen ein Kurzschlußstrom fließt, wobei die Ströme in allen intakten Leitungen die gleiche Richtung haben (z. B. alle Ströme fließen hinein).

In der Verknüpfungslogikschaltung V wird die oben angegebene Boolesche Gleichung für INTK realisiert, so daß in jedem Netzknoten ein interner Kurzschluß erkannt werden kann, wenn mindestens zwei intakte Leitungen an den betreffenden Netzknoten angeschlossen sind. Bei Erkennung eines internen Kurzschlusses wird das Signal INTK gesetzt, das zur Abschaltung aller angeschlossenen noch intakten Leitungen führt. Dieser Schaltvorgang unterbricht die Versorgung des betreffenden Netzknotens statisch und überführt die angeschlossenen Leitungen in einen stromlosen Zustand. Das kann beispielsweise durch einen elektromagnetischen Schalter mit mechanisch blockierter Endlage geschehen. Die mechanische Blockierung kann nach erfolgter Reparatur vom Wartungspersonal wieder freigegeben werden, so daß die Schalter wieder einschalten können. Sind zwischen zwei benachbarten Netzknoten Kj und Kj + 1 noch beide Verbindungsleitungen intakt, so sind die Kanallogikschaltungen dieser Leitungen $KLI1_j$, $KLI2_j$, $K^-r1_{j+1}$, $KLr2_{j+1}$ und die darin angeordneten Gatter $D1I1_j$, $D4I1_j$, $D1I2_j$, $D4I2_j$, $D1r1_{j+1}$, $D4r1_{j+1}$ $D1r2_{j+1}$, $D4r2_{j+1}$ durchgeschaltet und die Signale $OI1_j$, $OI2_j$, $Or_{1j+1}$, $Or2_{j+1}$ entsprechend den Signalen $OI'1_j$, $OI'2_j$, $Or'1_{j+1}$, $Or'2_{j+1}$. Falls zwischen zwei benachbarten Netzknoten Kj und Kj + 1 nur noch eine intakte Verbindungsleitung existiert, beispeilsweise Verbindungsleitung 1 zwischen Netzknoten K4 und K5, werden $D1I1_4$ und $D1r1_5$ gesperrt, und in den Kanallogikschaltungen $KLI1_4$ und $KLr1_5$ werden die Verzögerungsschaltungen TV wirksam. Die Signale $OI1_4$ und $Or1_5$ werden nun bei Auftreten entsprechender Strombeträge zeitverzögert an die Verknüpfungslogikschaltungen V der Netzknoten K4 bzw. K5 weitergeleitet. Somit ist es möglich, Mehrfachkurz schlüsse im System zu tolerieren und zu behandeln. Tritt nämlich nach Abschalten von Verbindungsleitungen ein weiterer Kurzschluß auf, kann in den Knotenpunkten, zwischen denen nur eine Verbindungsleitung intakt ist, nicht entschieden werden, ob der Kurzschluß in dieser einen Leitung stattgefunden hat oder nicht. Das zeitverzögerte Setzen des Signals O bewirkt, daß die kurzschlußbehaftete Leitung innerhalb der Zeitverzögerung aus dem System herausgeschaltet werden kann, falls es sich nicht um diese eine Leitung zwischen zwei Netzknoten handelt. Ist die kurzschlußbehaftete Leitung jedoch die, die als einzige zwei Nachbarnetzknoten verbindet, wird diese nach Ablauf der eingestellten Verzögerungszeit,wie bereits oben beschrieben,nacheinander von den beiden verbundenen Netzknoten getrennt.

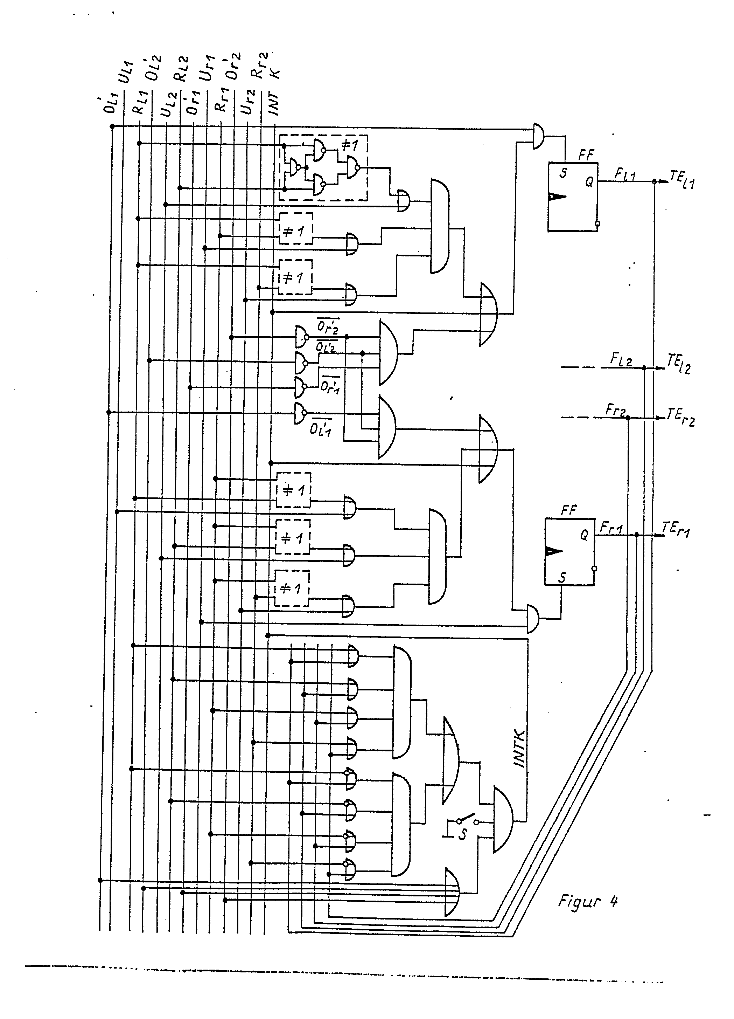

In der Figur 4 ist eine schaltungstechnische Realisierung der Verknüpfungslogikschaltung V für einen Netzknoten in einen als Doppelring ausgebildeten Stromversorgungssystem dargestellt, wobei diese Schaltung aus üblichen Logikbaugruppen aufgebaut ist und den Gleichungen des Patentanspruches 4 beziehungsweise dem im Ausführungsbeispiel beschriebenen speziellen Fall entspricht. Die für die Logiksignale verwendeten Bezeichnungen entsprechen den in der vorangegangenen Beschreibung bereits eingeführten Bezeichnungen.

Beim Schalter S handelt es sich um ein Bauelement, welches dazu dient, die Sonderbedingung beim Netzknoten mit Einspeisung zu realisieren, wo es gilt, das interne Signal INTK stets auf dem Potential Null zu halten. Das bedeutet, daß der Schalter S im Netzknoten mit Einspeisung stets geschlossen bzw. nicht vorhanden ist.

Die gezeigten Flip-Flops FF dienen der Erzeugung eines statischen Signales für die Ansteuerung der steuerbaren Schalter TE und für die Bildung des internen Signales INTK.

## Ansprüche

1. Verfahren zur fehlertoleranten Stromversorung von räumlich verteilten Funktionseinheiten, bei denen das Stromversorgungssystem als Doppelring oder Mehrfachring mit Punkt-zu-Punkt-Verbindungsleitungen, die mit ihren Verbindungspunkten Netzknoten bilden, ausgebildet ist, wobei an den Netzknoten Funktionseinheiten anliegen und der Doppelring bzw. der Mehrfachring einen einzigen Einspeisepunkt sowie Mittel zur Abschaltung kurzschlußbehafteter Ringteile aufweist, gekennzeichnet durch folgende Verfahrensschritte:

a) in den Punkt-zu-Punkt-Verbindungsleitungen wird im bzw. nahe dem Netzknoten der Strom nach seinem Betrag gemessen sowie seine Richtung bestimmt;

b) alle Stromrichtungen werden untereinander verglichen;

c) die Strombeträge werden mit für den jeweiligen Netzknoten festgelegten oberen und unteren Grenzbeträgen verglichen;

d) die mit Kurzschluß behaftete Verbindungsleitung bzw. der Netzknoten wird durch Auswertung der Ergebnisse der Vergleiche ermittelt;

e) die so ermittelte Verbindungsleitung wird vom Netzknoten bzw. der ermittelte Netzknoten wird von den Verbindungsleitungen getrennt.

2. Fehlertolerantes Stromversorgungssystem für räumlich verteilte Funktionseinheiten (RL), das als Doppel-oder Mehrfachring mit einem einzigen Einspeisepunkt (H) strukturiert ist und aus Punkt-zu-Punkt-Verbindungsleitungen (L) besteht, die mit ihren Verbindungen Netzknoten (K) bilden und in deren Verbindungsleitungen (L) Strommeßeinrichtungen (ME) und Schalter (TE) liegen, welche über Auslöseschaltungen angesteuert sind, dadurch gekennzeichnet, daß an den Stromversor gungseingängen jedes Netzknotens (K) jeweils ein steuerbarer Schalter (TE) und eine Strommeßeinrichtung (ME) angeordnet sind und jeder Netzknoten (K) eine Auswertelogik (A) aufweist, die mit allen Schaltern (TE) und Strommeßeinrichtungen (ME) des Netzknotens verbunden ist, wobei die Auswertelogik (A) aus einer Schaltungsanordnung besteht, welche die Ansteuerung der Schalter (TE) als Funktion der gemessenen Strombeträge und -richtungen realisiert.

3. Fehlertolerantes Stromversorgungssystem nach Anspruch 2,dadurch gekennzeichnet, daß die Strommeßeinrichtungen (ME) jeweils drei Binärausgänge für die binären Signale O für das Überschreiten eines festgelegten oberen (O) sowie für das Unterschreiten eines festgelegten unteren Stromgrenzwertes (U) und das Stromrichtungssignal (R) aufweisen.

4. Fehlertolerantes Stromversorgungssystem nach Anspruch 2 oder 3, dadurch gekennzeichnet, daß die Auswertelogik (A) eine digitale Verknüpfungsschaltung (V) enthält, welche die Booleschen Gleichungen

$$Fl_i = Ol_i \wedge \left\{ \bigwedge_{\substack{n \\ k=1 \\ k\neq i}} \left\{ [(Rl_i \neq Rl_k) \vee Ul_k] \wedge [(Rl_i \neq Rr_k) \vee Ur_k] \wedge [(Rl_i \neq Rr_i) \vee Ur_i] \right\} \right.$$
$$\vee \left\{ \bigwedge_{\substack{n \\ k=1 \\ k\neq i}} \overline{Ol}_k \wedge \overline{Or}_k \wedge \overline{Or}_i \right\}$$
$$\left. \vee \{ INTK \} \right\}$$

$$Fr_i = Or_i \wedge \left\{ \bigwedge_{\substack{n \\ k=1 \\ k\neq i}} \left\{ [(Rr_i \neq Rl_k) \vee Ul_k] \wedge [(Rr_i \neq Rr_k) \vee Ur_k] \wedge [(Rr_i \neq Rl_i) \vee Ul_i] \right\} \right.$$
$$\vee \left\{ \bigwedge_{\substack{n \\ k=1 \\ k\neq i}} [\overline{Ol}_k \wedge \overline{Or}_k \wedge \overline{Ol}_i] \right\}$$
$$\vee \left\{ INTK \right.$$

mit

$$INTK = \left\{ \left\{ \bigwedge_{k=1}^{n} [(Rl_k \vee Fl_k) \wedge (Rr_k \vee Fr_k)] \right\} \right.$$
$$\vee \left\{ \bigwedge_{k=1}^{n} [(\overline{Rl}_k \vee Fl_k) \, (\overline{Rr}_k \vee Fr_k)] \right\} \Bigg\}$$
$$\wedge \left\{ \bigvee_{k=1}^{n} [Ol_k \vee Or_k] \right\}$$

realisiert, wobei F ein statisches binäres Ansteuersignal für die zugeordneten Schalter (TE), n die Anzahl der Ringe des Stromversorgungssystems, i und k Laufvariable, r und l Indices zur Unterscheidung der Bezugsrichtungen zu den jeweils beiden benachbarten Netzknoten und INTK ein internes Signal bedeuten.

5. Fehlertolerantes Stromversorgungssystem nach einem der Ansprüche 2 bis 4, dadurch gekennzeichnet, daß

-die Auswertelogik (A) den Eingängen der digitalen Verknüpfungsschaltung (V) für die binären Signale O vorgeschaltete Kanallogikschaltungen (KL) enthält,

-jede Kanallogikschaltung (KL) aus zwei UND-Gattern (D1, D2) besteht, von denen das erste direkt und das zweite über eine Verzögerungsschaltung (TV) mit dem Eingang der Kanallogikschaltung (KL) verbunden ist, wobei die Ausgänge der UND-Gatter (D1, D2) über ein ODER-Gatter (D4) verknüpft sind,

-jede Kanallogikschaltung (KL) ein weiteres UND-Gatter (D3) enthält, dessen n-1 Eingänge genau an den Ausgängen der Verknüpfungsschaltung (V) gleicher Bezugsrichtung (r bzw. I) angeschlossen sind, die die Schalter (TE) n = i bzw. n = k ansteuern, und

-der Ausgang des dritten UND-Gatters (D3) mit dem zweiten Eingang des zweiten UND-Gatters (D2) und negiert mit dem zweiten Eingang des ersten UND-Gatters (D1) verbunden ist.

8

Figur 1

Figur 2

0 272 460

Figur 3

$O'_{L1}$  $U_{L1}$  $R_{L1}$  $O'_{L2}$  $U_{L2}$  $R_{L2}$  $O'_{r1}$  $U_{r1}$  $R_{r1}$  $O'_{r2}$  $U_{r2}$  $R_{r2}$  $INT$  $K$

$\neq 1$

$\neq 1$

$\neq 1$

$\overline{O'_{r2}}$
$\overline{O'_{L2}}$
$\overline{O'_{r1}}$
$\overline{O'_{L1}}$

$\neq 1$

$\neq 1$

$\neq 1$

$FF$  $S$  $Q$  $F_{L1}$  $TE_{L1}$

$F_{L2}$  $TE_{L2}$

$F_{r2}$  $TE_{r2}$

$FF$  $Q$  $F_{r1}$  $TE_{r1}$  $S$

$INTK$

$S$

Figur 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | FR-A-2 292 362 (SPRECHER & SCHUH) * Insgesamt * & DE-A-2 531 707 --- | 1-5 | H 02 H 7/28 |
| A | CH-A- 609 487 (SPRECHER & SCHUH) * Insgesamt * --- | 1-5 | |
| A | DE-C- 646 348 (ALLGEMEINE ELEKTRICITÄTS GESELLSCHAFT) --- | | |
| A,P | US-A-4 674 002 (WESTINGHOUSE) --- | | |
| A | BROWN BOVERI REVUE, Band 65, Nr. 6, Juni 1978, Seiten 388-397, Baden, CH; C.DE VEER: "Busbar and Breaker Back-up protection - choice of types and applications" ----- | | |

RECHERCHIERTE
SACHGEBIETE (Int. Cl.4)

H 02 H

Der vorliegende Recherchenbericht wurde für alle Patentansprüche erstellt

| Recherchenort | Abschlußdatum der Recherche | Prüfer |
|---|---|---|
| DEN HAAG | 10-03-1988 | SPEISER P. |